# EUROPÄISCHE PATENTSCHRIFT

(11) **EP 1 977 935 B1**
(45) Veröffentlichungstag und Bekanntmachung des Hinweises auf die Patenterteilung: **24.04.2013**
(21) Anmeldenummer: 08003317.8
(22) Anmeldetag: 23.02.2008
(51) Int. Cl.: B60R 19/34

(54) **Kraftfahrzeug-Rahmenstruktur und Crashbox dafür**
Motor vehicle framework and crashbox therefor
Structure de cadre d'un véhicule automobile et crashbox correspondante

(30) Priorität: 02.04.2007 DE 102007015865
(43) Veröffentlichungstag der Anmeldung: 08.10.2008
(73) Patentinhaber: GM Global Technology Operations LLC, Detroit, MI 48265-3000 (US)
(72) Erfinder: Braunbeck, Bardo, 55276 Oppenheim (DE); Hock, Theobald, 63762 Grossostheim (DE)
(74) Vertreter: Strauss, Peter

(56) Entgegenhaltungen:
- WO-A-2007/121896
- DE-A1-102005 029 738
- DE-A1-102006 019 653
- DE-A1-102006 025 856
- DE-B3-102005 021 663

## Beschreibung

Die vorliegende Erfindung betrifft eine Kraftfahrzeug-Rahmenstruktur, in der eine Crashbox verwendet ist. Crashboxen werden herkömmlicherweise in einer Kraftfahrzeug-Rahmenstruktur zwischen deren Längsträgern und einem Stoßfängerträger eingefügt, um bei einem nicht zu starken Zusammenstoß durch ihre Verformung Aufprallenergie zu absorbieren und dadurch nach Möglichkeit zu vermeiden, dass sich einer der Längsträger verformt. Eine Verformung des Längsträgers ist, wenn überhaupt, nur mit hohem Kostenaufwand reparierbar.

Herkömmlicherweise hat eine solche Crashbox meist eine kastenähnliche Struktur mit sich in Verlängerung des Längsträgers erstreckenden Wänden, die strukturiert sind, um beim Aufprall balgenartig gestaucht zu werden, und quer zu diesen Wänden ausgerichteten Flanschen, die zur Befestigung der Crashbox an einem Stoßfängerträger beziehungsweise einer Stirnseite des Längsträgers dienen.

Aus der Gattungsbildenden DE 10 2005 021 663 B3 ist eine Kraftfahrzeug-Rahmenstruktur bekannt, bei der eine Crashbox am Längsträger nicht mit Hilfe einander gegenüberliegender Flansche befestigt ist, sondern durch Einstecken eines Zapfens der Crashbox in einen Hohlraum des Längsträgers. Um den Längsträger bei einem Zusammenstoß wirksam vor Verformung zu schützen, ist es erforderlich, die bei dem Zusammenstoß auftretenden Kräfte in den Längsträger möglichst gleichmäßig über dessen Querschnitt verteilt einzuleiten. Dies ist bei einer eingesteckten Crashbox schwieriger als bei der herkömmlich über Flansche montierten, da die kraftverteilende und ausgleichende Wirkung der Flansche fortfällt. Daher ist es wichtig, zum Ausgleich einen großflächigen engen Kontakt zwischen den Flanken des Zapfens und dem Längsträger herzustellen.

Um den Zapfen einführen zu können, muss dessen Querschnitt jedoch etwas kleiner sein als der des ihn aufnehmenden Hohlraums. Wenn dies der Fall ist, kann der Zapfen aber sich gegenüberliegende Wände des Hohlraums nicht gleichzeitig berühren und Kraft in diese einleiten.

Aus DE 10 2006 019 653 A1 ist eine Rahmenstruktur für ein Kraftfahrzeug bekannt, bei dem der in den Längsträger eingreifende Zapfen im Innern mit einer Stütze versehen ist, so dass Schrauben, die die Wände des Längsträgers und des Zapfens kreuzen, so fest angezogen werden können, dass die Wände des Längsträgers nachgeben und sich an die des Zapfens anlegen.

Eine andere Möglichkeit, Kontakt zwischen dem Längsträger und dem darin eingeführten Zapfen herzustellen, ist, den zunächst spielhaltig in den Hohlraum des Längsträgers eingeführten Zapfen darin aufzuspreizen. DE 10 2005 021 663 B3 sieht hierfür zwei Spreizelemente mit in Gewindesockeln an den beiden Seitenflanken und in die Gewindesockel eingeschraubten Gewindehülsen vor. Durch Drehen der Gewindehülsen können die Seitenflanken auseinandergespreizt werden. Nachteilig ist, dass die Gewindehülsen nach dem Einstecken in die Längsträger nicht mehr zugänglich sind. Die Aufspreizung muss daher vor dem Einstecken vorgenommen werden.

Es besteht daher Bedarf nach einer Rahmenstruktur für ein Kraftfahrzeug mit einer Crashbox, die einerseits einfach und kostengünstig montierbar ist und andererseits dennoch einen wirksamen Schutz des Längsträgers vor Verformung gewährleistet.

Die Aufgabe wird erfindungsgemäß gelöstdurch eine Rahmenstruktur mit den Merkmalen des Anspruchs 1.Die Stützstrebe begrenzt die Nachgiebigkeit des Zapfens gegenüber einer vom stauchbaren Abschnitt her einwirkenden, die Flanken des Zapfens gegeneinander treibenden Kraft, so dass ein Zusammenrücken der Flanken, das den Rahmen der elastischen Verformbarkeit des Längsträgers überschreiten würde, vermieden werden kann. Der Spalt hingegen erlaubt ein

Auseinanderspreizen der Flanken des Zapfens zur Anpassung an den Längsträger, z.B. mit Hilfe von aus seitlicher Richtung ziehenden Schrauben, nach dem Einführen des Zapfens in den Längsträger.Der Spalt kann erhalten werden, indem beim Auseinanderspreizen der Flanken eine Sollbruchstelle der Stützstrebe bricht.

Die Stützstrebe ist vorzugsweise ein sich in Einführrichtung des Zapfens erstreckender Steg.

Um der Crashbox einerseits eine geschlossene Außenform zu geben und andererseits die Aufspreizung ihrer Flanken zu ermöglichen, umfasst der Zapfen vorzugsweise eine in einer auf den Seitenflanken senkrechten Richtung aufweitbare Außenhaut.

Die Möglichkeit zur Aufweitung kann insbesondere dadurch geschaffen sein, dass die Außenhaut in einem die zwei Seitenflanken verbindenden Abschnitt einen gewellten Verlauf aufweist.

Um eine einfache und preiswerte Fertigung zu ermöglichen, hängt die Außenhaut zweckmäßigerweise materialschlüssig, vorzugsweise einteilig, mit dem stauchbaren Abschnitt zusammen.

Einer bevorzugten, aus einer geringen Zahl von preiswerten Einzelteilen realisierbaren Ausgestaltung zufolge umfassen die Seitenflanken jeweils einen von zwei einander gegenüberliegenden Stegen eines H-förmigen Profils, und die Stützstrebe ist durch einen Mittelsteg dieses Profils gebildet.

Die Befestigung des Zapfens an dem Längsträger erfolgt vorzugsweise mit Hilfe von Schrauben, die die entgegengesetzten Wände des Längsträgers und die Flanken des Zapfens durchsetzen.

Weitere Merkmale und Vorteile der vorliegenden Erfindung ergeben sich aus der nachfolgenden Beschreibung von Ausführungsbeispielen unter Bezugnahme auf die beigefügten Figuren. Es zeigen:
- Fig. 1: eine perspektivische Ansicht eines Teils der Rahmenstruktur eines Kraftfahrzeugs gemäß der vorliegenden Erfindung;
- Fig. 2: einen vergrößerten Ausschnitt der in Fig. 1 gezeigten Rahmenstruktur;
- Fig. 3: eine perspektivische auseinandergezogene Ansicht eines Endes der Crashbox gemäß der vorliegenden Erfindung;
- Fig. 4: einen Querschnitt durch den Zapfen der Crashbox, eingeführt in einen Längsträger, vor der Befestigung der Crashbox an dem Längsträger;
- Fig. 5: einen zur Fig. 4 analogen Querschnitt im befestigten Zustand;
- Fig. 6: einen Längsschnitt durch den Zapfen und die den Zapfen aufnehmende Spitze des Längsträgers im befestigten Zustand;
- Fig. 7: einen zu Fig. 6 analogen Längsschnitt, der den Zustand nach einer Kollision darstellt;
- Fig. 8: einen zu Fig. 4 analogen Schnitt gemäß einer abgewandelten Ausgestaltung der Erfindung; und
- Fig. 9: einen weiteren zu Fig. 4 analogen Schnitt gemäß einer abgewandelten Ausgestaltung der Erfindung.

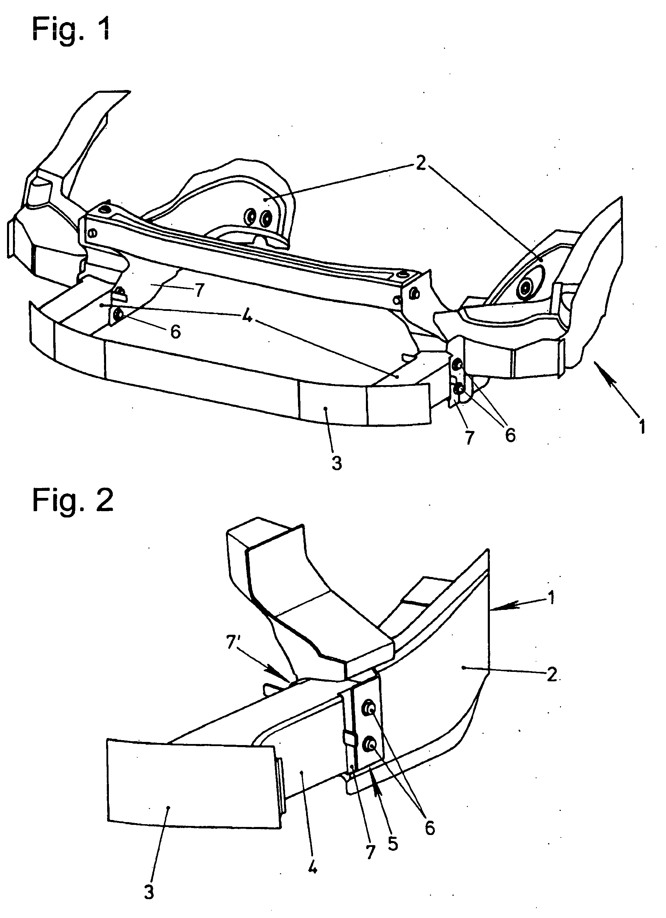

Fig. 1 zeigt perspektivisch einen Teil der Rahmenstruktur 1 einer Kraftfahrzeugkarosserie mit Längsträgern 2 und einem Stoßfängerquerträger 3. Zwischen dem Stoßfängerquerträger 3 und den Längsträgern 2 sind Crashboxen 4 in Verlängerung der Längsträger 2 angeordnet. Bei dem Stoßfängerquerträger 3 kann es sich sowohl um den Träger eines vorderen Stoßfängers als auch eines hinteren handeln. Der Längsträger 2 ist im wesentlichen rohrförmig mit einem rechteckigen Querschnitt ausgebildet und hat offene Längsenden, in die jeweils ein in Fig. 1 und 2 verborgener Zapfen der Crashbox 4 eingeschoben ist. Der Zapfen ist mit Hilfe von Schrauben 6, die sich durch Bohrungen in einander gegenüberliegenden Seitenwänden 7 des Längsträgers 2 erstrecken, an letzterem verankert.

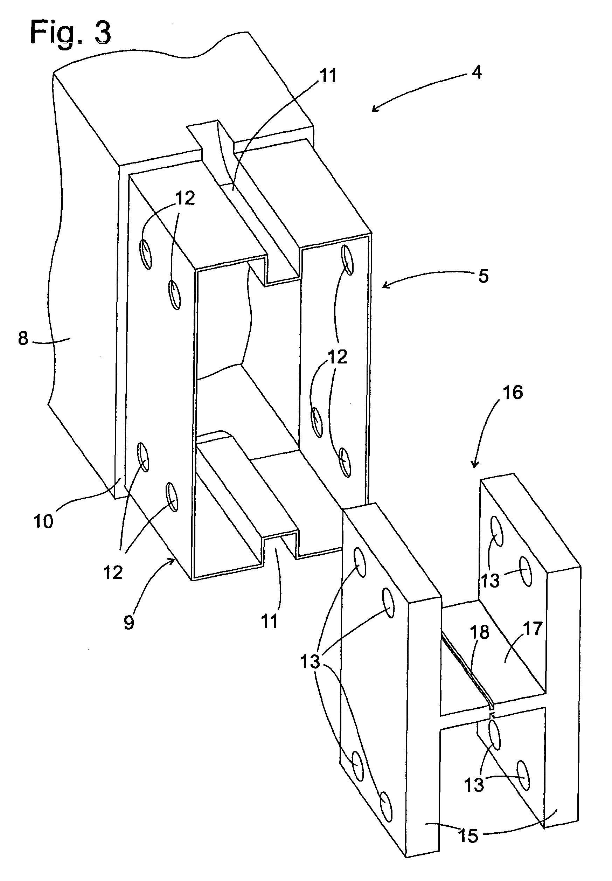

Fig. 3 zeigt eine perspektivische Ansicht eines Teils der Crashbox 4 mit dem zum Einführen in den Hohlraum des Längsträgers 2 vorgesehenen Zapfen, hier mit 5 bezeichnet. Die Crashbox 4 umfasst einen in Fig. 3 nur teilweise dargestellten stauchbaren Hauptabschnitt 8, der im wesentlichen in Gestalt eines Rohrstücks mit einer typischen Länge von 20 bis 25 cm und rechteckigem Querschnitt ausgebildet ist. An einem in Fig. 3 nicht dargestellten Ende ist der Hauptabschnitt 8 durch einen plattenförmigen Flansch verschlossen, der zur Befestigung an einem komplementären Flansch des Stoßfängerquerträgers 3 dient. An dem in Fig. 3 gezeigten Ende ist der Hauptabschnitt 8 einteilig durch eine Hülse 9 verlängert, deren Abmessungen in Höhe und Breite jeweils etwas kleiner sind als die des Hauptabschnitts. Wenn der Zapfen 5 in den Längsträger 2 eingeführt wird, dient eine umlaufende Schulter 10 zwischen dem Hauptabschnitt 8 und der Hülse 9 als Anschlag, der die Eindringtiefe des Zapfens 5 in den Längsträger 2 begrenzt.

Die Hülse 9 hat eine im Wesentlichen horizontale obere und untere Wand, in der jeweils eine sich in Längsrichtung erstreckende Nut 11 gebildet ist.

Seitenwände 14 der Hülse 9 sind mit Schraublöchern 12 versehen.

Entsprechende Schraublöcher 13 sind in zwei seitlichen Stegen 15 eines H-Profilstücks 16 gebildet, das zur Anbringung im Innern der Hülse 9 und in Kontakt mit deren Seitenwänden 14 vorgesehen ist. In einem mittleren Steg 17 des Profilstücks ist eine Sollbruchstelle 18 gebildet, an der die Materialstärke des Stegs 17 kleiner ist als in der Umgebung. Die Länge des Profilstücks 16 beträgt wie die der Hülse 9 ca. 50 mm; sie besteht aus einem festen, aber spröden Metall, vorzugsweise einer Aluminiumlegierung.

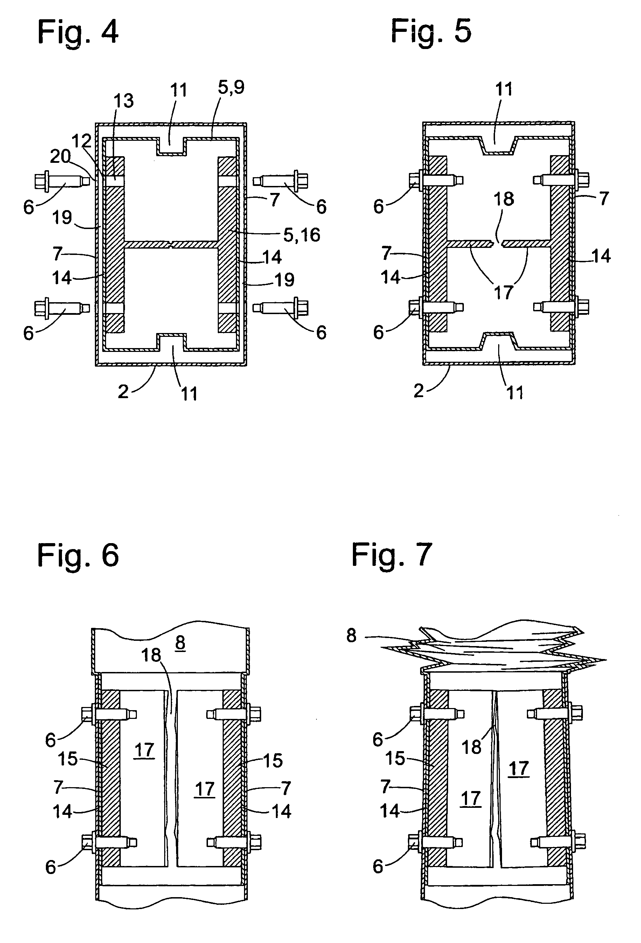

Fig. 4 zeigt einen Schnitt durch die Hülse 9 und das darin platzierte Profilstück 16, die gemeinsam den Zapfen 5 bilden, sowie durch den den Zapfen 5 aufnehmenden Längsträger 2. Der Zapfen 5 ist mit Spiel in Breiten- und Höhenrichtung in dem Längsträger 2 aufgenommen. Zwischen den Seitenwänden 7 bzw. 14 des Längsträgers 2 und der Hülse 9 befindet sich jeweils ein wenige Millimeter breiter Spalt 19.

Um die Crashbox 4 an dem Längsträger 2 zu befestigen, werden die Schrauben 6 durch Schraublöcher 20 des Längsträgers 2 und die Schraublöcher 12 der Hülse 9 hindurch geschoben und in ein Innengewinde der Schraublöcher 13 des Profilstücks 16 eingeschraubt. Die infolgedessen auf das Profilstück 16 einwirkende Zugkraft der Schrauben 6 führt schließlich zum Aufreißen des Profilstücks 16 an der Sollbruchstelle 18, und die Hülse 9 wird in Höhe der Nuten 11 aufgeweitet, wie in Fig. 5 zu sehen. Auf diese Weise wird ein inniger, form- und reibschlüssiger Kontakt zwischen den Seitenwänden 14, 7 der Hülse 9 und des Längsträgers 2 erhalten, der eine gleichmäßige Einleitung von Kompressionskräften in den Längsträger 2 im Falle eines Zusammenstoßes ermöglicht.

Fig. 6 zeigt wie Fig. 5 den montierten Zapfen 5 mit aufgerissener Sollbruchstelle 18, allerdings in einem horizontalen Schnitt. Ein entsprechender Schnitt nach einem Zusammenstoß und Stauchung des Hauptabschnitts 8 der Crashbox 4 ist in Fig. 7 gezeigt. Die bei der Verformung des Hauptabschnitts 8 auftretenden Kräfte treiben die Seitenwände 14 der Hülse 9 aufeinander zu, doch können sich die Seitenwände 14 nur so weit aufeinander zu bewegen, bis die zwei Bruchstücke des mittleren Steges 17 aneinander stoßen. Dies führt zwar, wie in Fig. 7 zu sehen, auch zu einer leichten Verformung der Spitze des Längsträgers 2, doch kann diese Verformung nicht stärker sein als die Gesamtbreite der Spalte 19 vor dem Festschrauben der Crashbox 4 am Längsträger 2. Indem also die Breite dieser Spalte 19 klein genug gewählt wird, kann sichergestellt werden, dass die Verformung des Längsträgers 2 dessen Elastizitätsgrenze nicht überschreitet. Es genügt somit, die Schrauben 6 zu lösen, damit der Längsträger 2 in seine ursprüngliche Gestalt zurückkehrt. Die nach einem nicht zu schweren Zusammenstoß an der Rahmenstruktur erforderlichen Reparaturarbeiten können sich daher auf deren Crashboxen 4 und gegebenenfalls den Stoßfängerquerträger 3 beschränken.

In der Darstellung der Fig. 4, 5 nimmt die Sollbruchstelle 18 nur einen kleinen Bruchteil der Gesamtbreite des mittleren Steges 17 ein, und man könnte vermuten, dass im Falle einer Stauchung der Crashbox 4 die zwei Fragmente des mittleren Steges 17 in vertikaler Richtung ausweichen und übereinander hinweg gleiten könnten, was die Stützwirkung des mittleren Steges 17 bei einem Zusammenstoß im wesentlichen zunichte machen würde. Versuche haben jedoch gezeigt, dass es zu einem übereinanderhinweggleiten nicht kommt, sondern dass die unregelmäßig geformten einander zugewandten Kanten der Fragmente sich aneinander verhaken und ein solches Ausweichen gerade verhindern.

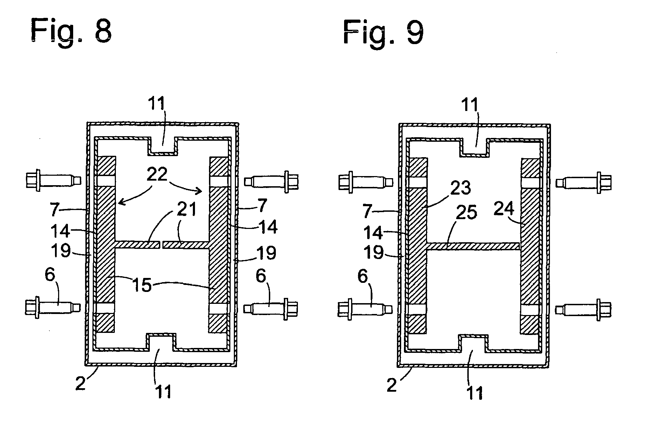

Die Fig. 8 bis 9 zeigen in zu Fig. 4 analogen Schnitten jeweils abgewandelte Ausgestaltungen der Erfindung. In Fig. 8 ist das H-Profilstück 16 der Fig. 4 durch zwei spiegelbildlich zueinander angeordnete T-Profile 22 ersetzt, bei denen der Querbalken des T jeweils einem der seitlichen Stege 15 und der Fuß 21 des T jeweils einen der Fragmente des mittleren Stegs 17 entspricht. D.h. der wesentliche Unterschied zwischen der Ausgestaltung der Fig. 8 und derjenigen der Fig. 4 bis 7 liegt darin, dass zur Formstabilisierung des Zapfens 5 nicht ein einzelnes Bauteil mit Sollbruchstelle wie das H-Profilstück 16, sondern zwei von vornherein getrennte Bauteile verwendet werden. Der Wegfall der Sollbruchstelle 18 erleichtert zwar das Anziehen der Schrauben 6, doch vereinfacht sich aufgrund der größeren Zahl der zu handhabenden Teile der Zusammenbau letztlich nicht. Da außerdem die unregelmäßig gezackten, sich verkeilenden Konturen der Sollbruchstelle 18 wegfallen, müssen die Füße 21 eine etwas größere Materialstärke als der Steg 15 aufweisen, um zu verhindern, dass die zwei Füße 21 sich bei einem Zusammenstoß übereinander schieben.

Die Möglichkeit des Übereinanderschiebens ist ausgeschlossen bei der Ausgestaltung der Fig. 9. Hier ist der Zapfen 5 durch ein T-förmiges Profilstück 23 und ein plattenförmiges Profilstück 24 versteift, wobei sich der Fuß 25 des T-Profilstücks 23 bis in unmittelbare Nähe des plattenförmigen Profilstücks 24 erstreckt. Aufgrund der großen Länge können an dem Fuß 25 jedoch größere Verformungsmomente als an den Füßen 21 der Fig. 8 auftreten, so dass auch hier eine erhöhte Materialstärke erforderlich sein kann, um ausreichende Formstabilität zu gewährleisten.

## Patentansprüche

1. Rahmenstruktur für ein Kraftfahrzeug mit wenigstens einem Längsträger (2) und einem Stoßfängerträger (3), der an dem Längsträger (2) über eine Crashbox (4) befestigt ist, wobei die Crashbox (4) einen in einer Längsrichtung stauchbaren Abschnitt (8) und an entgegengesetzten Enden dieses Abschnitts ein erstes Befestigungselement (5) zur Befestigung an dem Längsträger (2) bzw. ein zweites Befestigungselement zur Befestigung an dem Stoßfängerträger (3) umfasst, wobei das erste Befestigungselement (5) als ein in einen Hohlraum des Längsträgers (2) einführbarer Zapfen (5) ausgebildet ist, und eine Stützstrebe (17; 22; 25) sich zwischen zwei steifen Seitenflanken (14, 15)des Zapfens (5) durch einen inneren Hohlraum des Zapfens (5) erstreckt, **dadurch gekennzeichnet, dass** die Stützstrebe (17; 22; 25) wenigstens einen mit einer der Seitenflanken (14, 15) verbundenen und mit der jeweils anderen Seitenflanke (14, 15) unverbundenen, von ihr durch einen Spalt getrennten Abschnitt (17; 22; 25) umfasst.

2. Rahmenstruktur nach Anspruch 1, **dadurch gekennzeichnet, dass** der Spalt am Ort einer Sollbruchstelle (18) der Stützstrebe (17) gebildet ist.

3. Rahmenstruktur nach einem der vorhergehenden Ansprüche, **dadurch gekennzeichnet, dass** die Stützstrebe (17; 22; 25) ein sich in Einführrichtung des Zapfens (5) erstreckender Steg ist.

4. Rahmenstruktur nach einem der vorhergehenden Ansprüche, **dadurch gekennzeichnet, dass** der Zapfen (5) eine in einer auf den Seitenflanken (14, 15) senkrechten Richtung aufweitbare Außenhaut (9) umfasst.

5. Rahmenstruktur nach Anspruch 4, **dadurch gekennzeichnet, dass** die Außenhaut (9) in einem die zwei Seitenflanken (14, 15) verbindenden Abschnitt einen gewellten Verlauf (11) aufweist.

6. Rahmenstruktur nach Anspruch 4 oder 5, **dadurch gekennzeichnet, dass** die Außenhaut (9) materialschlüssig mit dem stauchbaren Abschnitt (8) zusammenhängt.

7. Rahmenstruktur nach einem der vorhergehenden Ansprüche, **dadurch gekennzeichnet, dass** die Seitenflanken (14, 15) jeweils einen von zwei einander gegenüberliegenden Stegen (15) eines H-förmigen Profils (16) umfassen, und dass die Stützstrebe durch einen Mittelsteg (17) des Profils (16) gebildet ist.

8. Rahmenstruktur nach einem der vorhergehenden Ansprüche, **dadurch gekennzeichnet, dass** die Seitenflanken (14, 15) des Zapfens (5) an entgegengesetzten Wänden (7) eines Hohlraums des Längsträgers befestigt sind.

9. Rahmenstruktur nach Anspruch 8, **dadurch gekennzeichnet, dass** der Zapfen (5) an dem Längsträger (2) mittels Schrauben (6) befestigt ist, die die entgegengesetzten Wände (7) des Längsträgers (2) und die Seitenflanken (14, 15) des Zapfens (5) durchsetzen.

## Claims

1. A frame structure for a motor vehicle, comprising at least one longitudinal beam (2) and a bumper support (3) which is fixed to the longitudinal beam (2) via a crashbox (4), with the crashbox (4) comprising a section (8) which is compressible in the longitudinal direction and, at the opposite end of said section, a first fastening element (5) for fastening to the longitudinal beam (2) and a second fastening element for fastening to the bumper support (3), with the first fastening element (5) being arranged as a spigotmember (5) which can be inserted into a cavity of the longitudinal beam (2), and a support strut (17; 22; 25) extends between two rigid side flanks (14, 15) of the pin (5) through a inner cavity of the pin (5), **characterized in that** the support strut (17; 22; 25) comprises at least one section (17; 22; 25) which is connected with one of the side flanks (14, 15) and is unconnected with the respectively other side flank (14, 15) and is separated therefrom by a gap.

2. A frame structure according to claim 1, **characterized in that** the gap is formed at the location of a predetermined breaking point (18) of the support strut (17).

3. A frame structure according to one of the preceding claims, **characterized in that** the support strut (17; 22; 25) is a web extending in the insertion direction of the spigotmember (5).

4. A frame structure according to one of the preceding claims, **characterized in that** the spigotmember (5) has an exterior skin (9) which can be expanded in a direction which is perpendicularly to the side flanks (14, 15).

5. A frame structure according to claim 4, **characterized in that** the exterior skin (9) has an undulating progression (11) in a section connecting the two side flanks (14, 15).

6. A frame structure according to claim 4 or 5, **characterized in that** the exterior skin (9) is materially connected with the compressible section (8).

7. A frame structure according to one of the preceding claims, **characterized in that** the side flanks (14, 15) respectively comprise one of two mutually opposite webs (15) of an H-shaped section (16), and that the support strut is formed by a middle web (17) of the section (16).

8. A frame structure according to one of the preceding claims, **characterized in that** the side flanks (14, 15) of the spigotmember (5) are fixed to opposite walls (7) of a cavity of the longitudinal beam.

9. A frame structure according to claim 8, **characterized in that** the spigotmember (5) is fixed to the longitudinal beam (2) by means of screws (6) which penetrate the opposite walls (7) of the longitudinal beam (2) and the side flanks (14, 15) of the spigotmember (5).

## Revendications

1. Structure de châssis pour un véhicule à moteur avec au moins un longeron (2) et un support de pare-chocs (3) fixé au longeron (2) par l'intermédiaire d'un caisson anticollision (4), dans laquelle le caisson anticollision (4) comprend une partie (8) déformable dans le sens longitudinal et, à des extrémités opposées de cette partie, un premier élément de fixation (5) pour la fixation sur le longeron (2) et un deuxième élément de fixation pour la fixation au support de pare-chocs (3), le premier élément de fixation (5) étant conformé comme un goujon (5) pouvant être introduit dans un compartiment creux du longeron (2), et un jambage d'appui (17 ; 22 ; 25) s'étendant entre deux flancs latéraux rigides (14, 15) du goujon (5) à travers un compartiment creux intérieur du goujon (5), **caractérisée en ce que** le jambage d'appui (17 ; 22 ; 25) comprend au moins une partie (17 ; 22 ; 25) reliée à l'un des flancs latéraux (14, 15) et non reliée à l'autre flanc latéral (14, 15) et séparée de celui-ci par un interstice.

2. Structure de châssis selon la revendication 1, **caractérisée en ce que** l'interstice est formé à l'emplacement d'un point de rupture défini (18) du jambage d'appui (17).

3. Structure de châssis selon l'une des revendications précédentes, **caractérisée en ce que** le jambage d'appui (17 ; 22 ; 25) est une barrette s'étendant dans le sens d'introduction du goujon (5).

4. Structure de châssis selon l'une des revendications précédentes, **caractérisée en ce que** le goujon (5) présente une enveloppe extérieure (9) expansible dans un sens perpendiculaire aux flancs latéraux (14, 15).

5. Structure de châssis selon la revendication 4, **caractérisée en ce que** l'enveloppe extérieure (9) présente une forme ondulée (11) dans une section reliant les deux flancs latéraux (14, 15).

6. Structure de châssis selon la revendication 4 ou 5, **caractérisée en ce que** l'enveloppe extérieure (9) est solidaire par le matériau de la partie déformable (8).

7. Structure de châssis selon l'une des revendications précédentes, **caractérisée en ce que** les flancs latéraux (14, 15) comprennent chacun une de deux barrettes (15) se faisant face d'un profilé en forme de H (16) et **en ce que** le jambage d'appui est formé par une barre médiane (17) du profilé (16).

8. Structure de châssis selon l'une des revendications précédentes, **caractérisée en ce que** les flancs latéraux (14, 15) du goujon (5) sont fixés sur des parois (7) opposées d'un compartiment creux du longeron.

9. Structure de châssis selon la revendication 8, **caractérisée en ce que** le goujon (5) est fixé au longeron (2) au moyen de vis (6) qui traversent les parois (7) se faisant face du longeron (2) et les flancs latéraux (14, 15) du goujon (5).
